# EUROPÄISCHE PATENTANMELDUNG

(11) **EP 1 361 642 A1**
(43) Veröffentlichungstag der Anmeldung: **12.11.2003**
(21) Anmeldenummer: 02010539.1
(22) Anmeldetag: 10.05.2002
(51) Int. Cl.: H02K 3/22, H02K 3/487, H02K 3/16

(54) **Rotor eines Turbogenerators**

(71) Anmelder: ALSTOM (Switzerland) Ltd, 5401 Baden (CH)
(72) Erfinder: Söhner, Walter, Dr.-Ing., 76149 Karlsruhe (DE)
(74) Vertreter: Dreiss, Fuhlendorf, Steimle & Becker

(57) **Zusammenfassung**

Die Erfindung betrifft einen Rotor (1) eines Turbogenerators mit einer aus Hohlleitern (3) gebildeten Erregerwicklung (4), einem Dämpferstab (8), einer zwischen Dämpferstab und Erregerwicklung angeordneten Isolierung (9), einem Keil (15) und eine im mittleren Rotorbereich befindlichen Gasaustrittszone (5). Zur Reduzierung des Abstandes zwischen Erregerwicklung und Keil ist vorgesehen, dass der Dämpferstab unterbrochen und in der Gasaustrittszone (5) von einem Isolierstück (10) ersetzt ist, und dass die Dämpferstabteile (8) vom Keil (15) elektrisch leitend überbrückt sind.

## Beschreibung

Die Erfindung betrifft einen Rotor eines Turbogenerators nach dem Oberbegriff des Anspruchs 1.

Bei einem derartigen allgemein bekannten Rotor wird durch eine Isolierung für die Einhaltung der notwendigen Kriechwege in der Gasaustrittszone gesorgt. Die Dicke der Isolierung zwischen Dämpferwicklung und Erregerwicklung hängt von der konstruktiven Ausführung der Wicklungsstäbe und den erforderlichen Kriechwegen in der Gasaustrittszone ab.

Die Isolierung ist im Allgemeinen über die gesamte Nutlänge in gleichbleibender Wanddicke ausgeführt.

Ist eine bestimmte Nuttiefe vorgegeben, was insbesondere bei Ersatzwicklungen für bereits im Einsatz befindliche Rotoren zutrifft, so kann die Isolierung zwischen Dämpferwicklung und Erregerwicklung bei Einhaltung einer kriechstromfesten Höhe zur Verkleinerung des für die Erregerwicklung verfügbaren Raumes führen, wodurch bei jedem Leiter sowohl der Kupferquerschnitt als auch ein ggf. vorhandener Gaskanal eingeschränkt wird. Wird der Bemessungs-Erregerstrom beibehalten oder gesteigert, so tritt bei gleichzeitig reduziertem Gasdurchfluß eine deutlich größere Wicklungserwärmung auf.

Es stellt sich die Aufgabe, einen Rotor der eingangs genannten Art anzugeben, bei dem der Abstand zwischen Erregerwicklung und Dämpferwicklung trotz Einhaltung der erforderlichen Kriechwege minimal ist.

Diese Aufgabe wird erfindungsgemäß durch einen Rotor eines Turbogenerators mit einer aus Hohlleitern gebildeten Erregerwicklung, einem Dämpferstab, einer zwischen Dämpferstab und Erregerwicklung angeordneten Isolierung, einem Keil und einer im mittleren Rotorbereich befindlichen Gasaustrittszone, dadurch gelöst, dass der Dämpferstab unterbrochen und im Bereich der Gasaustrittszone von einem Isolierstück ersetzt ist, und dass die Teile des Dämpferstabs vom Keil elektrisch leitend überbrückt sind.

Bei einer vorgegebenen Nuttiefe, sei es bei einer Ersatzwicklung oder bei einer Neuwicklung, kann somit die gewünschte Anzahl von Leitern mit jeweils gleicher Gesamtquerschnittsfläche (Kupferquerschnitt und Gaskanalquerschnitt) erreicht werden. Mit der neuen Lösung kann man Erregerwicklungsstäbe, die mit Hohlleitern und im Bereich der Gasauslässe mit durchbrochenem Flachkupfer ausgeführt sind, vorteilhaft durch durchgängige Kupferhohlleiter ersetzen, wobei die ursprüngliche Keilund Dämpferstabhöhe (mit Isolation) beibehalten wird, so dass dieselbe Rotor-Nutquerschnittsfläche und dieselbe Außenkontur für die Unterbringung der Erregerwicklung zur Verfügung steht, wie bei der Originalwicklung. Außerdem können die Originalkeile und die ursprünglichen Dämpferleiter nach geringfügigen Modifikationen wiederverwandt werden.

Gemäß einer bevorzugten Ausgestaltung übergreift ein aus elektrisch gut leitendem Material bestehender Brückenkeil ein im Bereich des Gasauslasses zur Kriechwegbildung angebrachtes Isolierstück, sowie jeweils einen Teilbereich der auf beiden Seiten des Isolierstücks angrenzenden Dämpferstabteile. Die restlichen Keilstücke, welche die Dämpferstabteile in denjenigen Bereichen übergreifen, wo kein Gasauslaß stattfindet, können aus elektrisch weniger gut leitendem Material bestehen. Zur Verbesserung des elektrischen Kontaktes ist zwischen dem Keil und den Dämpferstabteilen sowie dem Isolierstück eine elektrisch leitfähige Keilbeilage angeordnet. Zur Vermeidung einer Relativbewegung zwischen Keil und Dämpferstabteilen sind Sicherungselemente vorgesehen.

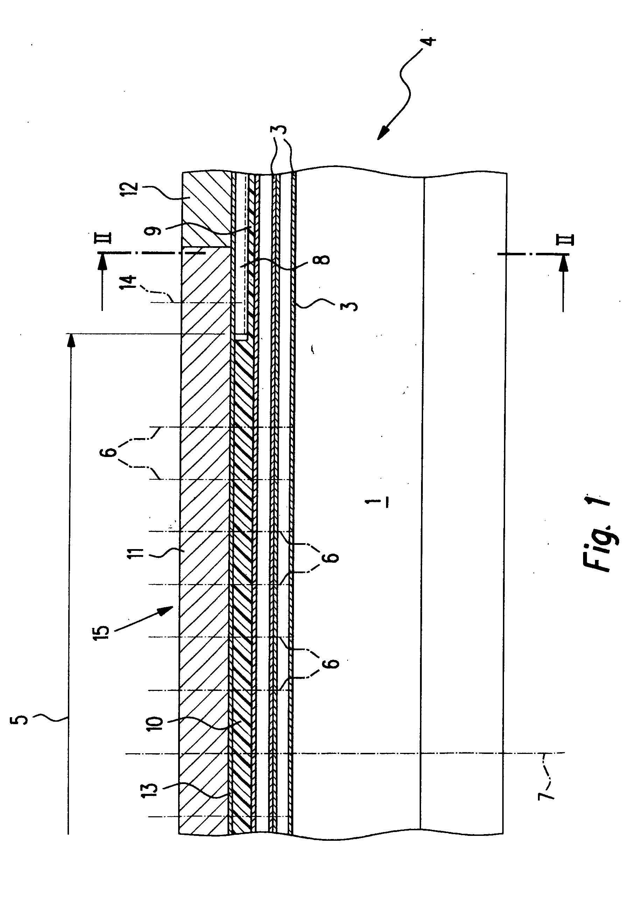

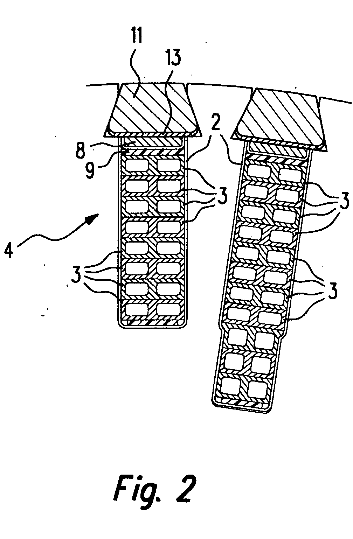

Anhand eines Ausführungsbeispiels und der schematischen Fig. 1 und 2 wird der erfindungsgemäße Rotor beschrieben.

Dabei zeigt
- Fig. 1:: einen Längsschnitt durch den Teilbereich eines Rotors und
- Fig. 2:: einen Schnitt entlang der Linie II-II der Fig. 1.

Die Fig. 1 und 2 zeigen Teilbereiche eines Rotors 1 eines nicht weiter dargestellten Turbogenerators. In einer Nut 2 sind mehrere Hohlleiter 3 zu erkennen, die eine Erregerwicklung 4 bilden. Eine Gasaustrittszone 5 stellt über Radialbohrungen 6 den Austritt des durch die Hohlräume der Hohlleiter 3 strömenden Kühlgases aus dem Rotor sicher. Die Linie 7 symbolisiert die Mitte des Rotors 1 in Längsrichtung.

Ein Teil des Dämpferstabs 8 erstreckt sich vom stirnseitigen Beginn der jeweiligen Nut 2 bis etwa zum Beginn der Gasaustrittszone 5. Ebenso weit erstreckt sich eine zwischen Erregerwicklung 4 und Dämpferstab 8 angeordnete und der Nutbreite angepaßte Isolierung 9. Zwischen den an beiden Enden des Rotors 1 vorgesehenen Teilen des Dämpferstabs 8 erstreckt sich ein ebenfalls der Nutbreite angepaßtes Isolierstück 10, dessen Höhe der Summe der Höhe eines Dämpferstabs 8 und der Höhe der Isolierung 9 entspricht. Die Höhe des Isolierstückes 10 stellt die Einhaltung des notwendigen Kriechweges in der Gasaustrittszone 5 sicher. Da nur in der Gasaustrittszone 5 die Kriechstromproblematik besteht, genügt im Bereich des Dämpferstabs 8 eine Isolationsschicht von geringer Höhe.

Ein dem Isolierstück 10 zugewandter Teilbereich des jeweiligen Dämpferstabs 8 und das Isolierstück 10 sind von einem Brückenkeil 11 übergriffen, der aus elektrisch gut leitendem Material besteht. Aus elektrisch weniger gut leitendem Material bestehen Keilstücke 12, die den jeweils nach außen gerichteten Bereich der Dämpferstäbe 8 übergreifen. Zwischen den den gesamten Keil 15 bildenden Keilstücken 12 und dem Brückenkeil 11 sowie dem Dämpferstab 8 und dem Isolierstück 10 ist eine aus Kupferstreifen gebildete Keilbeilage 13 angeordnet. Im Betrieb bewirken die Fliehkräfte, dass die beiden Dämpferstabteile 8 an die Unterseite von Brückenkeil 11 und Keilstück 12 gepreßt werden. Dies wirkt sich günstig auf die Kontakteigenschaften aus. Zur Verbesserung der Kontakteigenschaften kann die Überlappungstrecke zwischen Überbrückungskeil 11 und Dämpferstab 8 verlängert werden.

Mit 14 ist eine Madenschraube angedeutet, die eine Verschiebung des Dämpferstabs 8 gegenüber dem Überbrückungskeil 11 verhindert.

## Patentansprüche

1. Rotor (1) eines Turbogenerators mit einer aus Hohlleitern (3) gebildeten Erregerwicklung (4), einem Dämpferstab (8), einer zwischen Dämpferstab (8) und Erregerwicklung angeordneten Isolierung (9), einem Keil (15) und einer im mittleren Rotorbereich befindlichen Gasaustrittszone (5), **dadurch gekennzeichnet, dass** der Dämpferstab (8) unterbrochen und im Bereich der Gasaustrittszone (5) von einem Isolierstück (10) ersetzt ist, und dass die Teile des Dämpferstabs (8) vom Keil (15) elektrisch leitend überbrückt sind.

2. Rotor nach Anspruch 1, **dadurch gekennzeichnet, dass** der Keil (15) aus einem Brückenkeil (11) und weiteren Keilstücken (12) gebildet ist, wobei der Brückenkeil (11) einen dem Isolierstück (10) zugewandten Bereich des Dämpferstabs (8) und das Isolierstück (10) übergreift und wobei das jeweilige Keilstück (12) einem Randbereich des Dämpferstabteiles (8) zugeordnet ist.

3. Rotor nach Anspruch 1 oder 2, **dadurch gekennzeichnet, dass** zwischen dem Keil (15) und dem Dämpferstab (8) sowie dem Isolierstück (10) eine als Kupferstreifen ausgebildete Keilbeilage (13) angeordnet ist.

4. Rotor nach Anspruch 1, 2 oder 3, **dadurch gekennzeichnet, dass** Sicherungselemente (14) zur Vermeidung einer Relativbewegung zwischen Keil (15) und Dämpferstab (8) vorgesehen sind.
